# EUROPÄISCHE PATENTSCHRIFT

(11) **EP 3 137 403 B1**
(45) Veröffentlichungstag und Bekanntmachung des Hinweises auf die Patenterteilung: **01.07.2020**
(21) Anmeldenummer: 15718350.0
(22) Anmeldetag: 24.04.2015
(51) Int. Cl.: B65H 29/51, B65H 29/56, B65H 29/00

(54) **ABSTREIFEINRICHTUNG**
PEELING DEVICE
DISPOSITIF SÉPARATEUR

(30) Priorität: 28.04.2014 DE 102014006253
(43) Veröffentlichungstag der Anmeldung: 08.03.2017
(73) Patentinhaber: Giesecke+Devrient Currency Technology GmbH, 81677 München (DE)
(72) Erfinder: MÜLLER, Julian, 85586 Poing (DE)
(86) Internationale Anmeldenummer: PCT/EP2015/000859
(87) Internationale Veröffentlichungsnummer: WO 2015/165579

(56) Entgegenhaltungen:
- WO-A1-02/27626
- WO-A1-2013/140686
- US-A- 3 992 000
- US-A1- 2013 160 796

## Beschreibung

Die vorliegende Erfindung betrifft eine Abstreifeinrichtung zum Abstreifen von blattförmigen Gegenständen von einer Rolle. Insbesondere betrifft die Erfindung eine Abstreifeinrichtung für einen Folienwickelspeicher zum Abstreifen von blattförmigen Gegenständen von einer Speicherrolle des Folienwickelspeichers.

Folienwickelspeicher sind im Stand der Technik bekannt und werden vorzugsweise als Zwischenspeicher in Vorrichtungen zum Bearbeiten von blattförmigen Gegenständen, beispielsweise Banknotenbearbeitungsmaschinen oder Automaten zum Ein- und Auszahlen von Banknoten, verwendet.

Ein Folienwickelspeicher weist in der Regel eine oder zwei Folien auf, die von entsprechenden Vorratsrollen abgewickelt und auf diese wieder aufgewickelt werden können. Weiterhin ist eine Speicherrolle vorgesehen, auf der die eine oder mehreren Folien aufgewickelt werden können. Blattförmige Gegenstände, z.B. Banknoten, werden auf der Speicherrolle des Folienwickelspeichers gespeichert, indem die Gegenstände, nach einem Zuführen zu dem Folienwickelspeicher, zusammen mit den Folien auf die Speicherrolle aufgewickelt und zwischen einzelnen Folienlagen gespeichert werden, wobei die Folien gleichzeitig von der Vorratsrolle abgewickelt werden. Die Abgabe der zwischen den Folienlagen gespeicherten blattförmigen Gegenstände erfolgt durch Abwickeln der zumindest einen Folie von der Speicherrolle, wobei die Folie wieder auf die Vorratsrolle aufgewickelt wird und die blattförmigen Gegenstände beispielsweise über geeignete Transportrollen oder Transportbänder abgeführt werden.

Beim Ausgeben der blattförmigen Gegenstände von der Speicherrolle kann es vorkommen, dass einzelne blattförmige Gegenstände an der Rolle haften bleiben. Um dies zu verhindern, wird eine Abstreifeinrichtung eingesetzt, wie beispielsweise in WO 02/27626 A1 oder US 3,992,000 beschrieben, welche solche haftengebliebenen blattförmigen Gegenstände von der Rolle abstreift. Dabei wird insbesondere die in der US 3,992,000 offenbarte Abstreifeinrichtung als nächstliegender Stand der Technik angesehen.

Grundsätzlich können Abstreifeinrichtungen auch zum Abstreifen von blattförmigen Gegenständen von solchen Rollen verwendet werden, welche in einer Vorrichtung lediglich zum Transportieren von blattförmigen Gegenständen vorgesehen sind, ohne dass die Rolle als Speicherrolle eines Folienwickelspeichers dient. Solche Rollen finden sich beispielsweise in Druckern oder ähnlichen Geräten.

Derzeit verwendete Abstreifeinrichtungen umfassen als Abstreifer einen länglich ausgebildeten, an dem die Rolle berührenden Ende spitz zulaufenden Schaber. Der Schaber ist dabei elastisch ausgebildet, vorzugsweise aus einem Elastomer, und wird im Betrieb unter Vorspannung gegen die Rolle gedrückt. Insbesondere im Zusammenhang mit einem Folienwickelspeicher, dessen Speicherrolle prinzipbedingt einen im Laufe der Zeit variierenden Radius und eine unregelmäßige Rollenoberfläche aufweist, ergeben sich dabei folgende Schwierigkeiten. Der Anstellwinkel und der Druck, mit dem der Schaber gegen die Rolle gedrückt wird, variieren abhängig von dem Radius der Rolle und der Oberflächenstruktur der Rolle. Ein zu steiler oder zu flacher Anstellwinkel des Schabers kann dazu führen, dass an der Rolle anhaftende blattförmige Gegenstände von dem Schaber nicht erfasst werden und folglich nicht abgestreift werden. Weiterhin besteht die Gefahr, dass aufgrund von Unregelmäßigkeiten der Rollenoberfläche das die Rolle berührenden Ende des Schabers zeitweise den Kontakt zur Rollenoberfläche verliert. Auch dabei kann es vorkommen, dass an der Rolle anhaftende blattförmige Gegenstände nicht abgestreift werden.

Aufgabe der vorliegenden Erfindung ist es, eine Abstreifeinrichtung vorzuschlagen, welche den vorstehend beschriebenen Nachteilen Rechnung trägt.

Diese Aufgabe wird durch eine Abstreifeinrichtung sowie ein System mit den Merkmalen der unabhängigen Ansprüche gelöst. Vorteilhafte Ausgestaltungen und Weiterbildungen sind in den abhängigen Ansprüchen angegeben.

Gemäß einer bevorzugten Ausführungsform umfasst eine Abstreifeinrichtung zum Abstreifen von blattförmigen Gegenständen von einer Rolle, wie beispielsweise blattförmigen Wertdokumenten, wie Banknoten oder dergleichen, zumindest einen Abstreifer. Der Abstreifer ist dabei um eine Lagerung drehbar gelagert und umfasst einen Abstreifanteil, der im Querschnitt, senkrecht zu einer Drehachse der Rolle, spitz zulaufend ausgebildet ist. Weiterhin umfasst der Abstreifer einen von dem Abstreifanteil verschiedenen Abstützanteil. Der Abstreifanteil und der Abstützanteil sind dabei derart relativ zueinander angeordnet und der Abstreifer ist derart gelagert, dass, wenn der Abstreifer im Betrieb unter Vorspannung, beispielsweise unter Federvorspannung, gegen die Rolle gedrückt wird, der Abstreifer mit der Rolle stets genau zwei voneinander beanstandete Berührungspunkte aufweist, welche durch den Abstreifanteil und den Abstützanteil des Abstreifers definiert werden. Dies gilt auch bei variierendem Rollenradius der Rolle und bei Unregelmäßigkeiten der Rollenoberfläche.

Die Definition der Berührpunkte ist dabei so zu verstehen, dass der Abstreifer, im Querschnitt senkrecht zur Drehachse der Rolle betrachtet, genau zwei Berührpunkte mit der Rolle aufweist. Mit anderen Worten können der Abstreifanteil und/oder der Abstützanteil die Rolle an sich jeweils auch in mehr als einem Punkt berühren. Vorzugsweise erfolgt die Berührung, zumindest im Falle des Abstreifers, entlang einer Berührkante, die sich in axialer Richtung entlang der Rollenoberfläche erstreckt.

Aufgrund der Tatsache, dass zusätzlich zu dem Abstreifanteil stets auch der Abstützanteil die Rolle berührt und der Abstreifer um die Lagerung drehbar gelagert ist, kann der Anstellwinkel des Abstreifanteils relativ zur Rolle im Wesentlichen konstant gehalten werden. Ein zu steiler oder ein zu flacher Anstellwinkel kann dadurch vermieden werden.

Einerseits wird der Abstreifer unter geeigneter Vorspannung gegen die Rolle gehalten. Eine Veränderung des Anstellwinkels aufgrund eines sich ändernden Rollenradius kann bereits aufgrund der Geometrie des Abstreifers vermieden werden. Durch die beiden Berührpunkte zur Rolle wird bei regelmäßiger Rollenoberfläche im Wesentlichen ein konstanter Anstellwinkel des Abstreifanteils sichergestellt, auch wenn sich der Grad der Vorspannung aufgrund einer Veränderung des Radius der Rolle verändert.

Andererseits kann in dem Fall, dass sich der Anstellwinkel zwischen dem Abstreifanteil und der Rolle aufgrund von Unregelmäßigkeiten in der Rollenoberfläche verändert, ein durch den Abstützanteil unmittelbar erzeugter Gegendruck mit Hilfe der drehbaren Lagerung den ursprünglichen, voreingestellten Anstellwinkel des Abstreifanteils zur Rolle im Wesentlichen wiederherstellen. Solche Unregelmäßigkeiten in der Rollenoberfläche können insbesondere im Zusammenhang mit Folienwickelspeichern auftreten, wenn nicht nur einzelne Banknoten, sondern kleinere Bündel von Banknoten dort zwischengespeichert werden.

Der Abstreifer ist derart eingerichtet, dass die Lagerung im Betrieb, bezogen auf die Drehachse der Rolle, radial beabstandet von der Rolle und zwischen den beiden Berührpunkten angeordnet ist. Mit anderen Worten ist die Lagerung radial beabstandet von der Rolle in einem Winkelsegment angeordnet, welches, im Querschnitt senkrecht zur Drehachse der Rolle betrachtet, durch die Drehachse der Rolle und die beiden Berührpunkte definiert wird. Eine derartige Anordnung der Lagerung stellt sicher, dass stets beide Berührpunkte auch bei variierendem Rollenradius und/oder bei Unebenheiten der Rollenoberfläche mit der Rollenoberfläche in Kontakt bleiben.

Um im Betrieb eine stabile Anordnung des Abstreifers an der Rolle sicherstellen zu können, beträgt ein Winkel, welcher in Richtung der Rolle zwischen einer ersten Linie, die die Lagerung mit dem einen Berührpunkt verbindet, und einer zweiten Linie, die die Lagerung mit dem anderen Berührpunkt verbindet, eingeschlossen wird, zwischen etwa 60° und 120°, bevorzugt etwa 90°.

Vorzugsweise umfasst die Abstreifeinrichtung zumindest zwei Abstreifer. Bevorzugt sind mehr als zwei Abstreifer, besonders bevorzugt sind mehr als fünf Abstreifer, beispielsweise sechs Abstreifer. Das Vorsehen einer Mehrzahl von Abstreifern erlaubt ein genaueres Abtasten der Oberfläche der Rolle im Vergleich zum Vorsehen lediglich eines entsprechend breiteren Abstreifers.

Gemäß einer ersten bevorzugten Ausführungsform ist der zumindest eine Abstreifer um eine Achse drehbar gelagert, die parallel zu der Drehachse der Rolle angeordnet ist. Diese Art der Lagerung unterstützt in optimaler Weise die Anordnung des Abstreifers relativ zur Rolle zum Bilden der beiden Berührpunkte.

Gemäß einer zweiten bevorzugten Ausführungsform kann der zumindest eine Abstreifer auch kardanisch gelagert sein. Auf diese Weise können zusätzlich Unebenheiten der Rollenoberfläche in axialer Richtung optimal ausgeglichen werden.

Wie bereits erwähnt, kann die Abstreifeinrichtung eine Mehrzahl von Abstreifern umfassen. Dabei kann es vorgesehen sein, dass einige oder alle der Abstreifer separat drehbar gelagert sind. Auch damit kann ein Abtasten der Rollenoberfläche weiter optimiert werden.

Die Abstreifeinrichtung kann beispielsweise einen Schlitten umfassen, an dem der zumindest eine Abstreifer angeordnet ist. Der Schlitten ist dabei eingerichtet, in einer Einrichtung zum Bearbeiten von blattförmigen Gegenständen verfahrbar geführt und im Betrieb unter Vorspannung in Richtung der Rolle gedrückt zu werden. Durch diese Verfahrbarkeit des Schlittens und die auf den Schlitten wirkende Vorspannung können insbesondere variierende Rollenradien ausgeglichen werden.

Zum weiteren Ausgleichen von geringfügigen Unebenheiten oder Unregelmäßigkeiten der Rollenoberfläche kann ein weiteres Federelement vorgesehen sein. Der zumindest eine Abstreifer kann mit dem Schlitten über ein solches Federelement verbunden werden. Dieses Federelement ist eingerichtet, im Betrieb aufgrund der Vorspannung des Schlittens gegen die Rolle vorgespannt zu werden, d.h. den Abstreifer gegen die Rolle vorzuspannen. Als Federelement kann beispielsweise eine Blattfeder, ein Federblech oder dergleichen zum Einsatz kommen.

Es versteht sich, dass auch in dem Fall, dass eine Mehrzahl von Abstreifern vorliegen, einige oder alle diese Abstreifer separat über ein entsprechendes Federelement mit dem Schlitten verbunden sein können. Auf diese Weise kann die Oberfläche der Rolle durch die verschiedenen Abstreifer optimal abgetastet werden.

Der Abstützanteil des Abstreifers ist in dem Bereich, in dem dieser eingerichtet ist, im Betrieb die Rolle zu berühren, im Querschnitt senkrecht zur Drehachse der Rolle vorzugsweise abgerundet ausgebildet. Gemäß einer bevorzugten Variante kann der entsprechende Bereich beispielsweise durch einen Oberflächenanteil eines Kreiszylinders gebildet werden. Der Abstützanteil kann auch durch eine drehbare Rolle oder dergleichen gebildet werden.

Strukturell betrachtet kann der zumindest eine Abstreifer einen winkelförmigen Anteil umfassen. Der Abstreifanteil ist dabei am Ende eines ersten Winkelarmes und der Abstützanteil am Ende eines zweiten Winkelarmes angeordnet. Die beiden Winkelarme schließen dabei einen vorgegebenen, im Betrieb der Rolle zugewandten Winkel ein, welcher, wie erwähnt, etwa 60 bis 120°, vorzugsweise etwa 90°, betragen kann. Die Lagerung des Abstreifers ist dabei vorzugsweise in dem Bereich des winkelförmigen Anteils angeordnet, in dem die beiden Winkelarme zusammentreffen.

Eine bevorzugte Ausführungsform eines erfindungsgemäßen Systems umfasst demnach zumindest eine Rolle zum Transportieren und/oder Speichern von blattförmigen Gegenständen sowie eine vorstehend beschriebene Abstreifeinrichtung zum Abstreifen der blattförmigen Gegenstände von der Rolle.

Gemäß einer bevorzugten Ausführungsform ist die Rolle eine Speicherrolle eines Folienwickelspeichers zum Speichern der blattförmigen Gegenstände.

Gemäß einer weiteren bevorzugten Ausführungsform ist das System eine Banknotenbearbeitungsmaschine.

Die vorliegende Erfindung wird nachfolgend mit Bezug auf die beiliegenden Zeichnungen beispielhaft beschrieben. Darin zeigen:
- Figur 1: eine bevorzugte Ausführungsform einer erfindungsgemäßen Abstreifeinrichtung im Betrieb in einer Seitenansicht und
- Figur 2: die Abstreifeinrichtung aus Figur 1 in einer perspektivischen Ansicht.

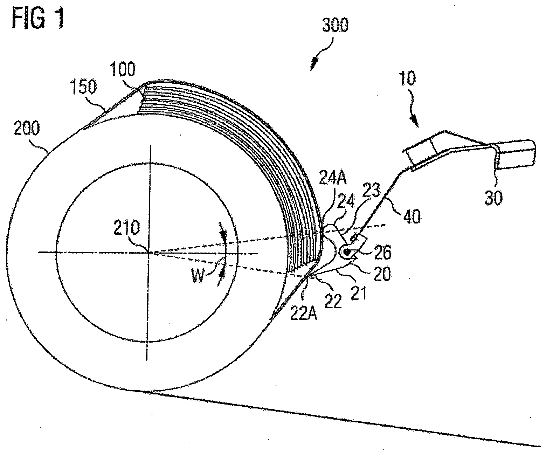

Mit Bezug auf Figur 1 ist eine Abstreifeinrichtung 10 zum Abstreifen von blattförmigen Gegenständen 100 von einer Rolle 200 gezeigt. Die Rolle 200 entspricht im gezeigten Beispiel einer Speicherrolle eines Folienwickelspeichers zum Speichern der blattförmigen Gegenstände, beispielsweise in einer Banknotenbearbeitungsmaschine. Die blattförmigen Dokumente 100 werden dabei zwischen verschiedenen Lagen einer Folie 150 gespeichert, wie dies in Figur 1 angedeutet ist. Im Laufe des Prozesses nimmt daher der Durchmesser der Speicherrolle 200 prinzipbedingt zu - und beim Ausgeben der gespeicherten Dokumente 100 auch wieder ab.

Es kann vorkommen, dass die Dokumente 100 auch bündelweise gespeichert werden, was zu Unebenheiten in der Rollenoberfläche führen kann. Die Darstellung in Figur 1 ist dabei nicht maßstäblich, sondern veranschaulicht die Situation lediglich schematisch.

Die Abtreifeinrichtung 10 kann alternativ auch im Zusammenhang mit Rollen verwendet werden, welche lediglich zum Transportieren blattförmiger Gegenstände vorgesehen sind, aber nicht zum Zwischenspeichern.

Beim Ausgeben der blattförmigen Dokumente 100 von der Speicherrolle 200 kann es vorkommen, dass einzelne Dokumente an der Rolle 200 haften bleiben. Um dies zu verhindern, wird die Abstreifeinrichtung 10 eingesetzt.

Die Abstreifeinrichtung 10 umfasst zumindest einen Abstreifer 20, der drehbar um eine Lagerung 26 gelagert ist. Im gezeigten Beispiel wird eine rein axiale Lagerung 26 um eine Achse verwendet, die parallel zur Drehachse 210 der Rolle 200 verläuft. Alternativ kann auch eine kardanische Lagerung eingesetzt werden, welche zusätzliche eine Drehung um eine senkrecht zur Drehachse 210 verlaufende Achse erlaubt.

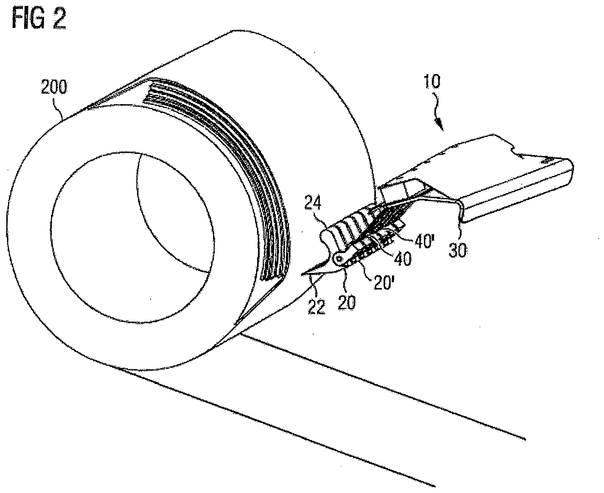

Wie mit Bezug auf Fig. 2 gezeigt, umfasst die Abstreifeinrichtung 10 tatsächlich eine Mehrzahl identischer Abstreifer 20, 20', die nebeneinander, in axialer Richtung der Rolle 200, angeordnet sind. Im Folgenden wird zunächst lediglich einer dieser Abstreifer 20 genauer beschrieben.

Der Abstreifer 20 umfasst einen - im Querschnitt senkrecht zur Drehachse 210 der Rolle 200 betrachtet - spitz zulaufenden Abstreifanteil 22 zum Abstreifen von blattförmigen Gegenständen von der Rolle 200. Wie in Fig. 2 ansatzweise erkennbar, berührt der Abstreifanteil 22 die Rolle 200 im Betrieb entlang einer Berührkante, die sich in axialer Richtung der Rolle 200 erstreckt.

Der Abstreifer 20 umfasst weiterhin einen Abstützanteil 24. Dieser ist angeordnet und eingerichtet, wie nachfolgend erläutert, zusätzlich zu dem Abstreifanteil 22, im Betrieb einen zweiten Berührpunkt mit der Rollenoberfläche zu bilden. Der Abstreifer 20 ist dabei derart ausgebildet und derart gelagert, dass im Betrieb, wenn der Abstreifer 20 unter Vorspannung gegen die Rolle 200 gedrückt wird, der Abstreifer 20 stets zwei Berührpunkte 22A, 24A mit der Rollenoberfläche bildet. Die Berührungspunkte 22A, 24A werden dabei gerade durch diejenigen Stellen definiert, an denen der Abstreifanteil 22 und der Abstützanteil 24 mit der Rolle 200 in Kontakt stehen.

Dies wird dadurch gewährleistet, dass die Lagerung 26, bezogen auf die Drehachse 210 der Rolle 200, radial beabstandet von der Rolle 200 und zwischen den beiden Berührpunkten 22A, 24A angeordnet ist. Mit anderen Worten ist die Lagerung 26, im Querschnitt senkrecht zu der Drehachse 210 der Rolle 200 betrachtet, radial beabstandet von der Rolle 200 und innerhalb eines Winkelsegmentes W angeordnet, welches durch die Drehachse 210 und die beiden Berührungspunkte 22A und 24A definiert wird.

Der Winkel, welcher in Richtung der Rolle 200 zwischen einer ersten Linie, die die Lagerung 26 mit dem ersten Berührpunkt 22A verbindet, und einer zweiten Linie, die die Lagerung 26 mit dem zweiten Berührpunkt 24A verbindet, eingeschlossen wird, beträgt in der Regel zwischen etwa 60° und 120°, im gezeigten Beispiel etwa 90°.

Der Abstreifer 20 ist mit einem Schlitten 30 verbunden. Der Schlitten 30 ist dabei eingerichtet, im Betrieb in einer entsprechenden Vorrichtung, beispielsweise einer Banknotenbearbeitungsmaschine, verfahrbar geführt und unter Vorspannung gegen die Rolle gedrückt zu werden. Die verfahrbare Führung des Schlittens verläuft dabei vorzugsweise im Wesentlichen in einer radialen Richtung mit Bezug auf die Rolle 200 bzw. derart, dass der Abstreifer 20 beim Verfahren des Schlittens 30 radial verlagert wird.

In der gezeigten Ausführungsform ist Abstreifer 20 mit dem Schlitten 30 über ein weiteres Federelement 40 verbunden, welches beispielsweise als Federblech oder dergleichen ausgebildet sein kann. Auf diese Weise können auch geringfügige Unregelmäßigkeiten der Rollenoberfläche abgefangen werden.

Der Abstreifer 20 ist im gezeigten Beispiel winkelförmig ausgebildet und umfasst zwei Winkelarme 21 und 23. Die Lagerung 26 ist in dem Bereich des Abstreifers 20 angeordnet, in dem die beiden Winkelarme 21, 23 zusammentreffen. Am Ende des ersten Winkelarms 21 ist der Abstreifanteil 22 angeordnet. Am Ende des zweiten Winkelarms 23 ist der Abstützanteil 24 angeordnet. Der Abstützanteil 24 ist in dem Bereich, in dem er die Rolle 200 berührt, abgerundet ausgebildet. Vorzugsweise kann dieser Bereich beispielsweise einem Oberflächenanteil eines Kreiszylinders entsprechen.

In Figur 2 ist die Anordnung aus Figur 1 in perspektivische Ansicht gezeigt. Dabei wird erkennbar, dass die Abstreifeinrichtung 10 eine Mehrzahl von identischen Abstreifern 20, 20' aufweist. Die Anzahl der Abstreifer 20, 20' kann dabei variabel sein. Die gezeigte Ausführungsform umfasst sechs Abstreifer 20.

Jeder dieser Abstreifer 20, 20' ist dabei separat drehbar gelagert und separat über ein Federelement 40, 40' mit dem Schlitten 30 verbunden. Auf diese Weise kann mittels der Mehrzahl der Abstreifer die Oberfläche der Rolle 200 optimal abgetastet werden, so dass auch bei variierendem Rollenradius und/oder bei Unebenheiten der Rollenoberfläche an der Rolle 200 anhaftende blattförmige Gegenstände 100 zuverlässig abgestreift werden können.

## Patentansprüche

1. Abstreifeinrichtung (10) zum Abstreifen von blattförmigen Gegenständen (100) von einer Rolle (200), umfassend zumindest einen Abstreifer (20), der einen spitz zulaufend ausgebildeten Abstreifanteil (22) sowie einen Abstützanteil (24) umfasst, wobei der Abstreifanteil (22) und der Abstützanteil (24) derart relativ zueinander angeordnet sind und der Abstreifer derart um eine Lagerung (26) drehbar gelagert ist, dass, wenn der Abstreifer (20) im Betrieb mit einer Rolle (200) unter Vorspannung gegen die Rolle (200) gedrückt wird, der Abstreifer (20) mit der Rolle (200) zwei Berührpunkte (22A, 24A) aufweist, welche jeweils durch den Abstreifanteil (22) und den Abstützanteil (24) des Abstreifers (20) definiert werden, wobei der Abstreifer derart eingerichtet ist, dass die Lagerung (26) im Betrieb mit einer Rolle (200) bezogen auf eine Drehachse (210) der Rolle (200) radial beabstandet von der Rolle (200) und zwischen den beiden Berührpunkten (22A, 24A) angeordnet ist, **dadurch gekennzeichnet, dass** ein Winkel, welcher in Richtung der Rolle (200) zwischen einer ersten Linie, die die Lagerung (26) mit dem einen Berührpunkt (22A) verbindet, und einer zweiten Linie, die die Lagerung (26) mit dem anderen Berührpunkt (24A) verbindet, eingeschlossen wird, zwischen etwa 60° und 120°, bevorzugt etwa 90°, beträgt.

2. Abstreifeinrichtung (10) nach Anspruch 1, **dadurch gekennzeichnet, dass** die Abstreifeinrichtung (10) zumindest zwei Abstreifer (20; 20'), bevorzugt mehr als zwei Abstreifer, besonders bevorzugt mehr als fünf Abstreifer umfasst.

3. Abstreifeinrichtung (10) nach einem der Ansprüche 1 bis 2, **dadurch gekennzeichnet, dass** der zumindest eine Abstreifer (20) axial um eine Achse (26) drehbar gelagert ist, welche, wenn der Abstreifer (20) im Betrieb mit einer Rolle (200) unter Vorspannung gegen die Rolle (200) gedrückt wird, parallel zu einer Drehachse (210) der Rolle (200) angeordnet ist.

4. Abstreifeinrichtung (10) nach Anspruch 3, **dadurch gekennzeichnet, dass** der zumindest eine Abstreifer (20) kardanisch gelagert ist.

5. Abstreifeinrichtung (10) nach Anspruch 3 oder 4, **dadurch gekennzeichnet, dass** die Abstreifeinrichtung (10) eine Mehrzahl von Abstreifern (20; 20') umfasst, die jeweils separat drehbar gelagert sind.

6. Abstreifeinrichtung (10) nach einem der Ansprüche 1 bis 5, **dadurch gekennzeichnet, dass** die Abstreifeinrichtung (10) einen Schlitten (30) umfasst, an dem der zumindest eine Abstreifer (20) angeordnet ist, wobei der Schlitten (30) eingerichtet ist, verfahrbar geführt und im Betrieb mit einer Rolle (200) unter Vorspannung in Richtung der Rolle (200) gedrückt zu werden.

7. Abstreifeinrichtung (10) nach Anspruch 6, **dadurch gekennzeichnet, dass** der zumindest eine Abstreifer (20) mit dem Schlitten (30) über ein Federelement (40) verbunden ist, welches eingerichtet ist, im Betrieb mit einer Rolle (200) aufgrund der Vorspannung des Schlittens (30) gegen die Rolle (200) vorgespannt zu werden.

8. Abstreifeinrichtung (10) nach Anspruch 6 oder 7, **dadurch gekennzeichnet, dass** die Abstreifeinrichtung (10) eine Mehrzahl von Abstreifern (20; 20') umfasst, welche jeweils separat über ein Federelement (40; 40') mit dem Schlitten (30) verbunden sind.

9. Abstreifeinrichtung (10) nach einem der Ansprüche 1 bis 8, **dadurch gekennzeichnet, dass** der Abstützanteil (24) in dem Bereich, in dem dieser eingerichtet ist, im Betrieb mit einer Rolle (200) die Rolle (200) zu berühren, abgerundet ausgebildet ist.

10. Abstreifeinrichtung (10) nach einem der Ansprüche 1 bis 9, **dadurch gekennzeichnet, dass** der zumindest eine Abstreifer (20) einen winkelförmigen Anteil umfasst, wobei der Abstreifanteil (22) am Ende eines ersten Winkelarms (21) und der Abstützanteil (24) am Ende eines zweiten Winkelarms (23) angeordnet ist, und wobei die Lagerung (26) des zumindest einen Abstreifers (20) in dem Bereich angeordnet ist, in dem die beiden Winkelarme (21, 23) zusammentreffen.

11. System (300), umfassend zumindest eine Rolle (200) zum Transportieren von blattförmigen Gegenständen (100) sowie eine Abstreifeinrichtung (10) nach einem der Ansprüche 1 bis 10 zum Abstreifen der blattförmigen Gegenstände (100) von der Rolle (200).

12. System (300) nach Anspruch 11, **dadurch gekennzeichnet, dass** die Rolle (200) eine Speicherrolle eines Folienwickelspeichers zum Zwischenspeichern von blattförmigen Gegenständen (100) ist.

13. System (300) nach Anspruch 11 oder 12, **dadurch gekennzeichnet, dass** das System (300) eine Banknotenbearbeitungsmaschine ist.

## Claims

1. A stripping device (10) for stripping sheet-shaped objects (100) from a roll (200), comprising at least one stripper (20) having a stripping portion (22) configured to be tapering to a point, as well as a supporting portion (24), wherein the stripping portion (22) and the supporting portion (24) are arranged relative to each other and the stripper is mounted to be rotatable around a bearing (26) in such a manner that, when the stripper (20) in operation with a roll (200) is pressed against the roll (200) while being pre-tensioned, the stripper (20) has two contact points (22A, 24A) with the roll (200), which contact points are defined respectively by the stripping portion (22) and the supporting portion (24) of the stripper (20), wherein the stripper is adapted such that the bearing (26) in operation with a roll (200), with reference to a rotational axis (210) of the roll (200), is radially spaced apart from the roll (200) and arranged between the two contact points (22A, 24A), **characterized in that** an angle enclosed in the direction of the roll (200) between a first line connecting the bearing (26) to the one contact point (22A) and a second line connecting the bearing (26) to the other contact point (24A), amounts to between approximately 60° and 120°, preferably approximately 90°.

2. The stripping device (10) according to claim 1, **characterized in that** the stripping device (10) includes at least two strippers (20; 20'), preferably more than two strippers, particularly preferably more than five strippers.

3. The stripping device (10) according to either of claims 1 to 2, **characterized in that** the at least one stripper (20) is mounted to be rotatable axially around an axis (26), which, when the stripper (20) in operation with a roll (200) is pressed against the roll (200) while being pre-tensioned, is arranged parallel to a rotational axis (210) of the roll (200).

4. The stripping device (10) according to claim 3, **characterized in that** the at least one stripper (20) is mounted on gimbals.

5. The stripping device (10) according to claim 3 or 4, **characterized in that** the stripping device (10) includes a plurality of strippers (20; 20') which are each rotatably mounted separately.

6. The stripping device (10) according to any of claims 1 to 5, **characterized in that** the stripping device (10) includes a carriage (30) on which the at least one stripper (20) is arranged, wherein the carriage (30) is adapted to be guided in displaceable manner and, in operation with a roll (200), to be pressed in the direction of the roll (200) while being pre-tensioned.

7. The stripping device (10) according to claim 6, **characterized in that** the at least one stripper (20) is connected to the carriage (30) via a spring element (40) which is adapted, in operation with a roll (200), to be pre-tensioned against the roll (200) due to the pre-tensioning of the carriage (30).

8. The stripping device (10) according to claim 6 or 7, **characterized in that** the stripping device (10) includes a plurality of strippers (20; 20') which are connected to the carriage (30) separately in each case via a spring element (40; 40').

9. The stripping device (10) according to any of claims 1 to 8, **characterized in that** the supporting portion (24) in the region in which said supporting portion is adapted, in operation with a roll (200), to contact the roll (200), is configured to be rounded.

10. The stripping device (10) according to any of claims 1 to 9, **characterized in that** the at least one stripper (20) includes an angular portion, wherein the stripping portion (22) is arranged at the end of a first angular arm (21) and the supporting portion (24) is arranged at the end of a second angular arm (23), and wherein the bearing (26) of the at least one stripper (20) is arranged in the region in which the two angular arms (21, 23) meet.

11. A system (300) including at least one roll (200) for transporting sheet-shaped objects (100) and a stripping device (10) according to any of claims 1 to 10 for stripping the sheet-shaped objects (100) from the roll (200).

12. The system (300) according to claim 11, **characterized in that** the roll (200) is a storage roll of a foil winding repository for intermediate storage of sheet-shaped objects (100) .

13. The system (300) according to claim 11 or 12, **characterized in that** the system (300) is a banknote processing machine.

## Revendications

1. Dispositif de raclage (10) destiné à expulser à partir d'un rouleau (200), par mouvement de raclage, des objets en forme de feuilles (100), comprenant au moins un racleur (20) qui comprend une partie de raclage (22) réalisée de manière se terminant en pointe ainsi qu'une partie d'appui (24), cependant que la partie de raclage (22) et la partie d'appui (24) sont agencées de telle façon relativement l'une à l'autre et que le racleur est logé de telle façon de manière à pouvoir tourner autour d'un palier (26) que, quand le racleur (20) est, lors du fonctionnement avec un rouleau (200), pressé sous précontrainte contre le rouleau (200), le racleur (20) présente deux points d'attouchement (22A, 24A) avec le rouleau (200), lesquels sont respectivement définis par la partie de raclage (22) et la partie d'appui (24) du racleur (20), cependant que le racleur est conçu de telle façon que le palier (26), lors du fonctionnement avec un rouleau (200), est, relativement à un axe de rotation (210) du rouleau (200), agencé de manière espacée radialement du rouleau (200) et entre les deux points d'attouchement (22A, 24A), **caractérisé en ce qu'**un angle qui, en direction du rouleau (200), est compris entre une première ligne qui relie le palier (26) avec le un point d'attouchement (22A) et une deuxième ligne qui relie le palier (26) avec l'autre point d'attouchement (24A) est compris entre environ 60° et 120°, étant de préférence d'environ 90°.

2. Dispositif de raclage (10) selon la revendication 1, **caractérisé en ce que** le dispositif de raclage (10) comprend au moins deux racleurs (20; 20'), de préférence plus de deux racleurs, particulièrement de préférence plus de cinq racleurs.

3. Dispositif de raclage (10) selon une des revendications de 1 à 2, **caractérisé en ce que**, lors du fonctionnement avec un rouleau (200), quand le racleur (20) est pressé sous précontrainte contre le rouleau (200), le au moins un racleur (20) est logé axialement, de manière à pouvoir tourner, autour d'un axe (26) agencé parallèlement à un axe de rotation (210) du rouleau (200).

4. Dispositif de raclage (10) selon la revendication 3, **caractérisé en ce que** le au moins un racleur (20) est monté à la cardan.

5. Dispositif de raclage (10) selon la revendication 3 ou 4, **caractérisé en ce que** le dispositif de raclage (10) comprend une pluralité de racleurs (20; 20') respectivement montés séparément de manière à pouvoir tourner.

6. Dispositif de raclage (10) selon une des revendications de 1 à 5, **caractérisé en ce que** le dispositif de raclage (10) comprend un chariot (30) auquel le au moins un racleur (20) est agencé, cependant que le chariot (30) est conçu pour être guidé de manière déplaçable et pour, lors du fonctionnement avec un rouleau (200), être pressé sous précontrainte dans la direction du rouleau (200).

7. Dispositif de raclage (10) selon la revendication 6, **caractérisé en ce que** le au moins un racleur (20) est relié au chariot (30) par l'intermédiaire d'un élément ressort (40) conçu pour, lors du fonctionnement avec un rouleau (200), être précontraint contre le rouleau (200) par suite de la précontrainte du chariot (30).

8. Dispositif de raclage (10) selon la revendication 6 ou 7, **caractérisé en ce que** le dispositif de raclage (10) comprend une pluralité de racleurs (20; 20') qui sont respectivement reliés séparément au chariot (30) par l'intermédiaire d'un élément ressort (40; 40').

9. Dispositif de raclage (10) selon une des revendications de 1 à 8, **caractérisé en ce que** la partie d'appui (24) est, dans la zone dans laquelle elle est conçue pour toucher le rouleau (200) lors du fonctionnement avec un rouleau (200), réalisée sous forme arrondie.

10. Dispositif de raclage (10) selon une des revendications de 1 à 9, **caractérisé en ce que** le au moins un racleur (20) comprend une partie angulaire, cependant que la partie de raclage (22) est agencée à l'extrémité d'un premier bras angulaire (21) et que la partie d'appui (24) est agencée à l'extrémité d'un deuxième bras angulaire (23), et cependant que le palier (26) du au moins un racleur (20) est agencé dans la zone dans laquelle les deux bras angulaires (21, 23) se rencontrent.

11. Système (300) comprenant au moins un rouleau (200) pour le transport d'objets en forme de feuilles (100), ainsi qu'un dispositif de raclage (10) selon une des revendications de 1 à 10 pour le raclage des objets en forme de feuilles (100) à partir du rouleau (200).

12. Système (300) selon la revendication 11, **caractérisé en ce que** le rouleau (200) est un rouleau de stockeur d'un stockeur de feuille bobinée destiné au stockage intermédiaire d'objets en forme de feuilles (100).

13. Système (300) selon la revendication 11 ou 12, **caractérisé en ce que** le système (300) est une machine de traitement de billets de banque.
